# EUROPEAN PATENT APPLICATION

(11) **EP 3 182 487 A1**
(43) Date of publication of application: **21.06.2017**
(21) Application number: 16765139.7
(22) Date of filing: 07.01.2016
(51) Int. Cl.: H01M 4/13, H01M 4/62, H01M 4/04, H01M 10/052, H01M 2/10

(54) **ELECTRODE WITH MULTILAYER STRUCTURE AND LITHIUM SECONDARY BATTERY HAVING SAME**

(30) Priority: 17.03.2015 KR 20150036599
(71) Applicant: LG Chem, Ltd., Seoul 07336 (KR)
(72) Inventor: KIM, Kyoung Ho, Daejeon 34122 (KR); KIM, Seok Koo, Daejeon 34122 (KR); KIM, Ju Ri, Daejeon 34122 (KR); SONG, Jooyong, Daejeon 34122 (KR); LEE, Hye Youn, Daejeon 34122 (KR)
(74) Representative: Goddar, Heinz J.
(86) International application number: PCT/KR2016/000125
(87) International publication number: WO 2016/148383

(57) **Abstract**

Disclosed herein are a multilayer electrode and a lithium secondary battery including the same. The multilayer electrode includes an electrode current collector for transmitting electrons between an external wire and an electrode active material and three or more electrode mixture layers sequentially applied to the electrode current collector, wherein each of the electrode mixture layers includes an electrode active material and a conducting agent, and wherein the content of the conducting agent of one of adjacent electrode mixture layers that is relatively close to the current collector in the direction in which the electrode mixture layers are formed is higher than that of the conducting agent of the other of the adjacent electrode mixture layers that is relatively distant from the current collector.

## Description

### [Cross-Reference to Related Applications]

This application claims the benefit of Korean Patent Application No. 2015-0036599 filed on March 17, 2015 with the Korean Intellectual Property Office, the disclosure of which is herein incorporated by reference in its entirety.

### [Technical Field]

The present invention relates to a multilayer electrode and a lithium secondary battery including the same.

### [Background Art]

As mobile devices have been increasingly developed, and the demand for such mobile devices has increased, the demand for secondary batteries has sharply increased as an energy source for mobile devices. In recent years, secondary batteries have been used as power sources for electric vehicles (EV) and hybrid electric vehicles (HEV). Among such secondary batteries is a lithium secondary battery, which exhibits high energy density, discharge voltage, and output stability, the demand for which is high.

A secondary battery is configured to have a structure in which an electrode assembly of a positive electrode / separator / negative electrode structure, which can be charged and discharged, is mounted in a battery case. The positive electrode or the negative electrode, which will be simply referred to as an electrode, is manufactured by applying an electrode material, including an electrode active material and organic and inorganic compounds, to one surface or both surfaces of a metal current collector and then drying and pressing the electrode material.

In the case in which the electrode material including the electrode active material is applied to the current collector and is then dried in order to manufacture the electrode, however, a solvent is volatilized in the drying process, with the result that the organic and inorganic compounds, such as a binder and a conducting agent, move to the upper part of the coating surface. Since a polymer binder contains a solvent, the binder moves to the upper part of the coating surface as the solvent is volatilized. As a result, the light conducting agent, which is coupled to the binder, also moves to the upper part of the coating surface.

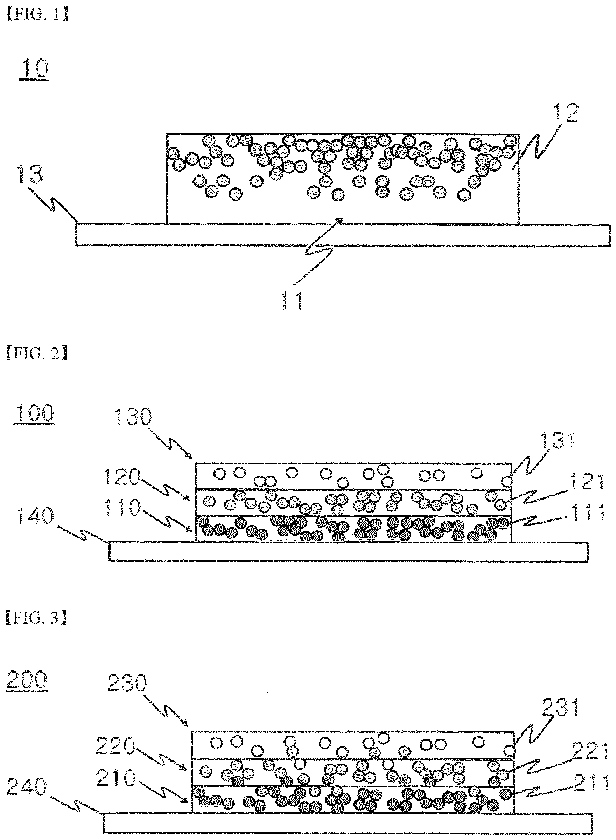

FIG. 1 is a schematic view showing the distribution of content of a conducting agent in a conventional single-layer electrode 10. Referring to FIG. 1, an electrode mixture layer 11 including a relatively small amount of conducting agent 12 is coated on the upper surface of a current collector 13. When viewing the section of the electrode 10 after drying, the conducting agent 12 aggregates at the upper part of the electrode 10, since the conducting agent 12 moves upward during drying.

When viewing the section of the electrode after drying, a binder and the conducting agent are differently distributed in the thickness direction due to the above phenomenon. As a result, the distribution of the conducting agent in the lower part of the electrode coating surface is low, whereby electrical conductivity is very low. Consequently, an electron transfer path is limited, and therefore resistance is increased as a C rate is increased, which leads to reduced capacity and deteriorated output characteristics.

In order to solve the above problem, an excessive amount of conducting agent may be used. In the case in which an excessive amount of conducting agent is used, however, the content of an electrode active material is relatively decreased, whereby the capacity of the electrode is reduced.

Therefore, there is a high necessity for electrode technology that is capable of fundamentally solving the above problem without using an excessive amount of conducting agent.

### [Disclosure]

### [Technical Problem]

Therefore, the present invention has been made to solve the above problems and other technical problems that have yet to be resolved.

As a result of a variety of extensive and intensive studies and experiments to solve the problems as described above, the inventors of the present application have found that, in the case in which an electrode is configured to have a multilayer structure, e.g. a structure including three or more layers, in which the contents of conducting agents of electrode mixture layers are different from each other in the direction in which the electrode mixture layers are formed, it is possible to prevent an increase in resistance due to the lack of the conducting agent in the vicinity of a current collector. The present invention has been completed based on these findings.

### [Technical Solution]

In accordance with one aspect of the present invention, the above and other objects can be accomplished by the provision of a multilayer electrode including an electrode current collector for transmitting electrons between an external wire and an electrode active material and three or more electrode mixture layers sequentially applied to the electrode current collector, wherein each of the electrode mixture layers includes an electrode active material and a conducting agent, and wherein the content of the conducting agent of one of adjacent electrode mixture layers that is relatively close to the current collector in the direction in which the electrode mixture layers are formed is higher than that of the conducting agent of the other of the adjacent electrode mixture layers that is relatively distant from the current collector.

As previously described, in the conventional single-layer electrode, the binder and the conducting agent moves to the upper part of the electrode mixture layer, which is distant from the electrode current collector, due to volatilization of the solvent in the process of drying the electrode, with the result that resistance is increased, whereby it is not possible to obtain sufficient electrical conductivity. Consequently, the capacity and output characteristics of a secondary battery are reduced. In addition, in the case in which an excessive amount of a conducting agent is used in order to solve this problem, the content of the active material is relatively reduced, with the result that the capacity and energy density of the electrode are reduced.

As a result of a variety of extensive and intensive studies and experiments, the inventors of the present application have found that, in the case in which an electrode is configured to have a multilayer structure, e.g. a structure including three or more layers, in which the contents of conducting agents of electrode mixture layers are gradually increased as the electrode mixture layers become close to an electrode current collector in the direction in which the electrode mixture layers are formed, as described above, it is possible to prevent an increase in resistance due to the lack of the conducting agent in the vicinity of the electrode current collector, thereby improving the overall performance of a secondary battery.

In a concrete example, the difference in the content of the conducting agent between the adjacent electrode mixture layers is 0.5 weight % to 10 weight %, specifically 2 weight % to 5 weight %.

If the difference in the content of the conducting agent between the adjacent electrode mixture layers is less than 0.5 weight %, which means that there is little difference in the content of the conducting agent between the adjacent electrode mixture layers, the conducting agent moves upward at the time of drying the electrode, with the result that resistance is increased at the interface between the electrode current collector and the electrode mixture layer, which is undesirable. On the other hand, if the difference in the content of the conducting agent between the adjacent electrode mixture layers is greater than 10 weight %, which means that there is great difference in the content of the conducting agent between the adjacent electrode mixture layers, resistance is increased at the interface between the electrode mixture layers, with the result that it is not possible to obtain desired electrical conductivity. Furthermore, energy density is reduced since an excessive amount of conducting agent is used, which is also undesirable.

In consideration of the above, therefore, the multilayer electrode according to the present invention preferably includes three or more electrode mixture layers. In a two-layer electrode, if the content of the conducting agent in the vicinity of the electrode current collector is increased while the content of the conducting agent is maintained uniform in order to obtain the effects intended by the present invention, the difference in the content of the conducting agent between the electrode mixture layers is increased. In this case, resistance may be increased at the interface between the electrode mixture layers.

For this reason, three or more electrode mixture layers are preferably provided to reduce the difference in the content of the conducting agent between the adjacent electrode mixture layers. In this case, it is possible to obtain the effects intended by the present invention without an increase in resistance at the interface between the electrode mixture layers.

Furthermore, as previously described, the conducting agent moves to the upper part of each electrode mixture layer. In particular, in the case in which a loading amount is increased in order to manufacture a high-capacity electrode, the thickness of each electrode mixture layer is correspondingly increased. In a structure in which two electrode mixture layers are disposed, therefore, the conducting agent moves to the upper part of each electrode mixture layer, with the result that the conducting agent is distant from the current collector by the thickness of each electrode mixture layer. In the structure in which two electrode mixture layers are disposed, therefore, it is not possible to obtain the effects intended by the present invention.

Consequently, it is preferable for a high-capacity electrode to include at least three electrode mixture layers. The number of electrode mixture layers is not particularly restricted. However, if the number of electrode mixture layers is too large, the manufacturing process is complicated, with the result that efficiency is reduced in terms of time and cost. For this reason, it is more preferable for the electrode to include three to five electrode mixture layers. More specifically, the electrode may include three electrode mixture layers.

Meanwhile, in the multilayer electrode according to the present invention, as described above, the content of the conducting agent of one of adjacent electrode mixture layers that is relatively close to the current collector in the direction in which the electrode mixture layers are formed is higher than that of the conducting agent of the other of the adjacent electrode mixture layers that is relatively distant from the current collector. Consequently, the contents of conducting agents of the electrode mixture layers are gradually decreased as the electrode mixture layers become distant from the electrode current collector.

That is, in the multilayer electrode according to the present invention, the content of the conducting agent is gradually decreased little by little, specifically by 0.5 weight % to 10 weight %, and more specifically by 2 weight % to 5 weight %, from the innermost electrode mixture layer to the outermost electrode mixture layer within a range in which the total content of the conducting agent is too high.

The content of the conducting agent of the innermost electrode mixture layer, which directly contacts the electrode current collector, may be 3 weight % to 40 weight %, specifically 5 weight % to 40 weight %, based on the total weight of the innermost electrode mixture layer within a range in which the content of the conducting agent of the innermost electrode mixture layer is higher than the content of the conducting agent of an electrode mixture layer that is adjacent to the innermost electrode mixture layer. The content of the conducting agent of the outermost electrode mixture layer, which is the most distant from the electrode current collector, may be 1 weight % to 10 weight %, specifically 2 weight % to 5 weight %, based on the total weight of the outermost electrode mixture layer within a range in which the content of the conducting agent of the outermost electrode mixture layer is lower than the content of the conducting agent of an electrode mixture layer that is adjacent to the outermost electrode mixture layer.

If the content of the conducting agent of the innermost electrode mixture layer is less than 3 weight %, it is not possible to obtain the effect of improving electrical conductivity intended by the present invention, which is undesirable. If the content of the conducting agent of the outermost electrode mixture layer is less than 1 weight %, the electrical conductivity of the outermost electrode mixture layer is very low, which is undesirable. If the contents of the conducting agents of the innermost electrode mixture layer and the outermost electrode mixture layer are greater than 40 weight % and 10 weight %, respectively, the content of the conducting agent in the electrode is too high, with the result that the amount of active material is relatively reduced, whereby energy density is reduced, which is also undesirable.

In the case in which the contents of the conducting agents of the innermost electrode mixture layer and the outermost electrode mixture layer are set with the above-specified ranges, as described above, the difference in the content of the conducting agent between adjacent electrode mixture layers and the number of electrode mixture layers may be appropriately selected. In this case, the difference in the content of the conducting agent between the electrode mixture layers may be set within a range of 0.5 weight % to 10 weight %.

The thicknesses of the three or more electrode mixture layers are not limited. The three or more electrode mixture layers may have the same thickness, or two or more of the three or more electrode mixture layers may have different thicknesses.

That is, the thicknesses of the three or more electrode mixture layers may be appropriately selected according to the desired distribution shape of the content of the conducting agent based on the content of the conducting agent in each electrode mixture layer. Consequently, the three or more electrode mixture layers may have the same thickness, some of the three or more electrode mixture layers may have the same thickness, or the three or more electrode mixture layers may have different thicknesses.

The multilayer electrode according to the present invention may be variously configured depending on the manufacturing method or the manufacturing conditions. In a concrete example, the conducting agents of the adjacent electrode mixture layers may not be mixed with each other but may adjoin each other at the interface between the adjacent electrode mixture layers. In another concrete example, the conducting agents of the adjacent electrode mixture layers may be mixed with each other at the interface between the adjacent electrode mixture layers so as to form a concentration gradient. Specifically, the conducting agents of the adjacent electrode mixture layers may have a concentration gradient in which the contents of the conducting agents are sequentially reduced in the direction that becomes distant from the electrode current collector.

Specifically, the multilayer electrode may be manufactured through the steps of (a) preparing three or more electrode slurries having different contents of conducting agents and (b) sequentially applying the electrode slurries to the surface of an electrode current collector, with one of the electrode slurries having the highest content of the conducting agent being applied first, and drying the electrode slurries to form electrode mixture layers. Step (b) may include individually drying each of the electrode slurries after application of each of the electrode slurries such that the electrode slurries are not entirely mixed. However, the present invention is not limited thereto.

Consequently, the multilayer electrode may be configured as described above depending on the manufacturing conditions, such as drying temperature.

Meanwhile, the multilayer electrode according to the present invention may be a positive electrode or a negative electrode. Specifically, the multilayer electrode according to the present invention may be a positive electrode exhibiting relatively low electrical conductivity in consideration of the kind of the active material.

In the case in which the multilayer electrode is a positive electrode, each electrode active material, as a positive electrode active material, may include a layered compound, such as a lithium cobalt oxide (LiCoO₂) or a lithium nickel oxide (LiNiO₂), or a compound replaced by one or more transition metals; a lithium manganese oxide represented by a chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; an Ni-sited lithium nickel oxide represented by a chemical formula LiNi₁₋ₓMₓO₂ (where M= Co, Mn, Al, Cu, Fe, Mg, B, or Ga, and x = 0.01 to 0.3); a lithium manganese composite oxide represented by a chemical formula LiMn₂₋ₓMₓO₂ (where M= Co, Ni, Fe, Cr, Zn, or Ta, and x = 0.01 to 0.1) or a chemical formula Li₂Mn₃MO₈ (where M= Fe, Co, Ni, Cu, or Zn); a lithium manganese composite oxide having a spinel structure represented by LiNiₓMn_{2-X}O₄; LiMn₂O₄ having Li of a chemical formula partially replaced by alkaline earth metal ions; a disulfide compound; or Fe₂(MoO₄)₃. However, the present invention is not limited thereto.

The positive electrode active materials may be of the same kind or different kinds.

On the other hand, in the case in which the multilayer electrode is a negative electrode, each electrode active material, as a negative electrode active material, may include at least one carbon-based material selected from the group consisting of artificial crystalline graphite, natural crystalline graphite, amorphous hard carbon, low-crystalline soft carbon, carbon black, acetylene black, Ketjen black, Super-P, graphene, and fibrous carbon, Si-based materials, metal composite oxides such as LiₓFe₂O₃ (0≤x≤1), LiₓWO₂ (0≤x≤1), and SnₓMe₁₋ₓMe'_{y}O_{z} (Me: Mn, Fe, Pb, or Ge; Me': Al, B, P, Si, Group I, II and III elements, or halogens; 0<x≤1; 1≤y≤3; and 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; titanium oxides; and lithium titanium oxides. However, the present invention is not limited thereto.

The negative electrode active materials may be of the same kind or different kinds.

That is, the electrode active materials in the three or more electrode mixture layers may be of the same kind, or the electrode active materials in two or more of the three or more electrode mixture layers may be of different kinds.

In addition, each conductive agent included in the multilayer electrode is not particularly restricted as long as the conductive agent exhibits high conductivity while the conductive agent does not induce any chemical change in a battery to which the conductive agent is applied. For example, graphite, such as natural graphite or artificial graphite; carbon black, such as carbon black, acetylene black, Ketjen black, channel black, furnace black, lamp black, or summer black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or polyphenylene derivatives may be used as the conductive agent.

In the same manner as the electrode active materials, the conducting agents in the three or more electrode mixture layers may be of the same kind, or the conducting agents in two or more of the three or more electrode mixture layers may be of different kinds.

In addition, each of the electrode mixture layers may further include a binder, in addition to the electrode active material and the conducting agent. According to circumstances, each of the electrode mixture layers may further include a filler.

The binder is a component assisting in binding between the active material and the conductive agent and in binding with the current collector. The binder is generally added in an amount of 1 to 30 weight % based on the total weight of the electrode mixture layer including the electrode active material. As examples of the binder, there may be used polyvinylidene fluoride, polyvinyl alcohol, carboxymethylcellulose (CMC), starch, hydroxypropylcellulose, regenerated cellulose, polyvinyl pyrollidone, tetrafluoroethylene, polyethylene, polypropylene, ethylene-propylene-diene terpolymer (EPDM), sulfonated EPDM, styrene butadiene rubber, fluoro rubber, and various copolymers.

The filler is an optional component used to inhibit expansion of the electrode. There is no particular limit on the filler as long as the filler does not cause chemical changes in a battery to which the filler is applied, and is made of a fibrous material. As examples of the filler, there may be used olefin polymers, such as polyethylene and polypropylene, and fibrous materials, such as glass fiber and carbon fiber.

The binders and fillers in the three or more electrode mixture layers may be of the same kind, or the binders and fillers in two or more of the three or more electrode mixture layers may be of different kinds.

Meanwhile, the electrode current collector, which transmits electrons between an external wire and the electrode active material, is generally configured to have a thickness of 3 to 500 *µ*m. The current collector is not particularly restricted as long as the current collector exhibits high conductivity while the current collector does not induce any chemical change in a battery to which the current collector is applied. For example, the current collector may be made of copper, stainless steel, aluminum, nickel, titanium, or plastic carbon. Alternatively, the current collector may be made of copper or stainless steel, the surface of which is treated with carbon, nickel, titanium, or silver, or an aluminum-cadmium alloy. The current collector may have a micro-scale uneven pattern formed on the surface thereof so as to increase the binding force of the electrode active material. The negative electrode current collector may be configured in various forms, such as a film, a sheet, a foil, a net, a porous body, a foam body, and a non-woven fabric body. Specifically, the current collector may be a metal foil. More specifically, the current collector may be an aluminum (Al) foil or a copper (Cu) foil.

In accordance with another aspect of the present invention, there is provided a lithium secondary battery including the multilayer electrode.

The lithium secondary battery is configured to have a structure in which an electrode assembly, including the multilayer electrode and a separator, is impregnated with a non-aqueous electrolyte containing lithium salt.

As the separator, for example, an insulative thin film exhibiting high ion permeability and high mechanical strength may be used. The separator generally has a pore diameter of 0.01 to 10 *µ*m and a thickness of 5 to 300 *µ*m. As the material for the separator, for example, a sheet or non-woven fabric made of olefin polymer, such as polypropylene, which exhibits chemical resistance and hydrophobicity, glass fiber, or polyethylene is used. In the case in which a solid electrolyte, such as polymer, is used as an electrolyte, the solid electrolyte may function as the separator.

The non-aqueous electrolyte containing lithium salt is composed of a non-aqueous electrolytic solution and lithium salt. A non-aqueous organic solvent, an organic solid electrolyte, or an inorganic solid electrolyte may be used as the non-aqueous electrolytic solution. However, the present invention is not limited thereto.

As examples of the non-aqueous organic solvent, mention may be made of non-protic organic solvents, such as N-methyl-2-pyrollidinone, propylene carbonate, ethylene carbonate, butylene carbonate, dimethyl carbonate, diethyl carbonate, gamma-butyro lactone, 1,2-dimethoxy ethane, tetrahydroxyfuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

As examples of the organic solid electrolyte, mention may be made of polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

As examples of the inorganic solid electrolyte, mention may be made of nitrides, halides, and sulphates of lithium (Li), such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

The lithium salt is a material that is readily soluble in the above-mentioned non-aqueous electrolyte, and may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lower aliphatic carboxylic acid lithium, lithium tetraphenyl borate, and imide.

In addition, in order to improve charge and discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the non-aqueous electrolyte containing lithium salt. According to circumstances, in order to impart incombustibility, the non-aqueous electrolyte containing lithium salt may further include halogen-containing solvents, such as carbon tetrachloride and ethylene trifluoride. Furthermore, in order to improve high-temperature retention characteristics, the non-aqueous electrolyte containing lithium salt may further include carbon dioxide gas. In addition, fluoro-ethylene carbonate (FEC) and propene sultone (PRS) may be further included.

In a concrete example, lithium salt, such as LiPF₆, LiClO₄, LiBF₄, or LiN(SO₂CF₃)₂, may be added to a mixed solvent of cyclic carbonate, such as EC or PC, which is a high dielectric solvent, and linear carbonate, such as DEC, DMC, or EMC, which is a low viscosity solvent, to prepare an electrolyte solution.

In accordance with other aspects of the present invention, there are provided a battery module including the secondary battery as a unit cell and a device including the battery module as a power source.

Specific examples of the device may be an electric automobile, including an electric vehicle (EV), a hybrid electric vehicle (HEV), and a plug-in hybrid electric vehicle (PHEV), and a power storage system. However, the present invention is not limited thereto.

The structure and manufacturing method of the battery module and the structure and manufacturing method of the device are well known in the art to which the present invention pertains, and a detailed description thereof will be omitted.

### [Brief Description of Drawings]

The above and other objects, features and other advantages of the present invention will be more clearly understood from the following detailed description taken in conjunction with the accompanying drawings, in which:
FIG. 1 is a schematic view showing the distribution of content of a conducting agent in a conventional single-layer electrode;
FIG. 2 is a schematic view showing the distribution of content of a conducting agent in an electrode according to an embodiment of the present invention; and
FIG. 3 is a schematic view showing the distribution of content of a conducting agent in an electrode according to another embodiment of the present invention.

### [Best Mode]

Now, exemplary embodiments of the present invention will be described in detail with reference to the accompanying drawings. It should be noted, however, that the scope of the present invention is not limited by the illustrated embodiments.

FIG. 2 is a schematic view showing the distribution of content of a conducting agent in an electrode according to an embodiment of the present invention for easier understanding of the construction of the electrode according to the present invention.

Referring to FIG. 2, an electrode 100 is configured to have a three layer structure including a first electrode mixture layer 110 applied to a current collector 140, a second electrode mixture layer 120 applied to the first electrode mixture layer 110, and a third electrode mixture layer 130 applied to the second electrode mixture layer 120.

The content of a conducting agent 111 included in the first electrode mixture layer 110 is higher than that of a conducting agent 121 included in the second electrode mixture layer 120, and the content of the conducting agent 121 included in the second electrode mixture layer 120 is higher than that of a conducting agent 131 included in the third electrode mixture layer 130. The conducting agents 111, 121, and 131 are not mixed with each other but adjoin each other at the interface between the first electrode mixture layer 110 and the second electrode mixture layer 120 and at the interface between the second electrode mixture layer 120 and the third electrode mixture layer 130.

FIG. 3 is a schematic view showing the distribution of content of a conducting agent in an electrode according to another embodiment of the present invention.

Referring to FIG. 3, an electrode 200 is configured to have a three layer structure including a first electrode mixture layer 210 applied to a current collector 240, a second electrode mixture layer 220 applied to the first electrode mixture layer 210, and a third electrode mixture layer 230 applied to the second electrode mixture layer 220, in the same manner as the electrode 100 of FIG. 2. In addition, the content of a conducting agent 211 included in the first electrode mixture layer 210 is higher than that of a conducting agent 221 included in the second electrode mixture layer 220, and the content of the conducting agent 221 included in the second electrode mixture layer 220 is higher than that of a conducting agent 231 included in the third electrode mixture layer 230.

Unlike the electrode 100 of FIG. 2, however, the conducting agents 111, 121, and 131 are mixed with each other at the interface between the first electrode mixture layer 210 and the second electrode mixture layer 220 and at the interface between the second electrode mixture layer 220 and the third electrode mixture layer 230. As a result, the electrode 200 has a concentration gradient in which the contents of the conducting agents are sequentially reduced from the first electrode mixture layer 210 to the second electrode mixture layer 220 and from the second electrode mixture layer 220 to the third electrode mixture layer 230.

In the electrodes 100 and 200 of FIGS. 2 and 3, the content of the conducting agent included in the first electrode mixture layer 110 is 0.5 weight % to 10 weight % higher than that of the conducting agent included in the second electrode mixture layer 120, and the content of the conducting agent included in the second electrode mixture layer 120 is 0.5 weight % to 10 weight % higher than that of the conducting agent included in the third electrode mixture layer 130, although the electrodes are slightly different in structure from each other. As a result, the contents of the conducting agents 111 and 211 in the vicinity of the current collectors 140 and 240 are the highest, whereby it is possible to prevent an increase in resistance due to lack of the conducting agents, thereby improving the performance of a battery.

Meanwhile, in FIGS. 2 and 3, only the conducting agents are shown as being included in the electrode mixture layers in order to effectively describe the structure of the electrode according to the present invention. However, it is a matter of course that other compounds, such as electrode active materials and binders, are included.

Hereinafter, the present invention will be described in more detail with reference to the following example. This example is provided only for illustration of the present invention and should not be construed as limiting the scope of the present invention.

### <Example 1>

88 weight % of Li_{1.2}Ni_{0.2}Mn_{0.5}CO_{0.1}O₂ as a positive electrode active material, 7 weight % of natural graphite as a conductive agent, and 5 weight % of PVdF as a binder were mixed with NMP as a solvent to manufacture a first positive electrode slurry.

91 weight % of Li_{1.2}Ni_{0.2}Mn_{0.5}CO_{0.1}O₂ as a positive electrode active material, 5 weight % of natural graphite as a conductive agent, and 4 weight % of PVdF as a binder were mixed with NMP as a solvent to manufacture a second positive electrode slurry.

94 weight % of Li_{1.2}Ni_{0.2}Mn_{0.5}Co_{0.1}O₂ as a positive electrode active material, 3 weight % of natural graphite as a conductive agent, and 3 weight % of PVdF as a binder were mixed with NMP as a solvent to manufacture a third positive electrode slurry.

The first positive electrode slurry was applied to aluminum foil having a thickness of 20 *µ*m such that the first positive electrode slurry had a thickness of 40 *µ*m and was then pressed and dried, the second positive electrode slurry was applied to the first positive electrode slurry such that the second positive electrode slurry had a thickness of 40 *µ*m and was then pressed and dried, and the third positive electrode slurry was applied to the second positive electrode slurry such that the third positive electrode slurry had a thickness of 40 *µ*m and was then pressed and dried to manufacture a positive electrode.

84.15 weight % of natural graphite as a negative electrode active material, 9.35 weight % of SiO, 2 weight % of a conductive agent (Super-P), 3 weight % of a binder (SBR), and 1.5 weight % of a thickening agent (CMC) were mixed with H₂O as a solvent to manufacture a negative electrode mixture. The negative electrode mixture was applied to copper foil having a thickness of 20 *µ*m such that the negative electrode mixture had a thickness of 120 *µ*m and was then pressed and dried to manufacture a negative electrode.

A porous polyethylene separator was disposed between the positive electrode and the negative electrode, and then the positive electrode, the porous polyethylene separator, and the negative electrode were impregnated with an electrolytic solution having 1 weight % of an additive (VC), 1.5 weight % of PS, and 1M of LiPF₆ dissolved in a carbonate solvent of EC : EMC = 1 : 2 to manufacture a sheet type lithium secondary battery having a size of 3 cm x 4 cm.

### <Comparative Example 1>

A positive electrode and a lithium secondary battery were manufactured in the same manner as in Example 1 except that only a first positive electrode slurry was applied to a thickness of 120 *µ*m.

### <Comparative Example 2>

A positive electrode and a lithium secondary battery were manufactured in the same manner as in Example 1 except that only a second positive electrode slurry was applied to a thickness of 120 *µ*m.

### <Comparative Example 3>

A lithium secondary battery were manufactured in the same manner as in Example 1 except that a first positive electrode slurry was applied to aluminum foil having a thickness of 20 *µ*m such that the first positive electrode slurry had a thickness of 60 *µ*m and was then pressed and dried, and a second positive electrode slurry was applied to the first positive electrode slurry such that the second positive electrode slurry had a thickness of 60 *µ*m and was then pressed and dried to manufacture a positive electrode.

### < Experimental example 1>

Rate tests were carried out on the secondary batteries manufactured according to Example 1 and Comparative Examples 1 to 3 in a voltage range of 2.5 V to 4.4 V. The results are shown in Table 1 below.

**[Table 1]**

| | 0.1C/0.1C vs. 0.1C/0.1C | 0.5C/0.5C vs. 0.1C/0.1C | 1C/1C vs. 0.1C/0.1C | 2C/2C vs. 0.1C/0.1C |
|---|---|---|---|---|
| Example 1 | 100%, 54.9 mAh | 92.0% | 83.8% | 72.2% |
| Comparative Example 1 | 100%, 51.2 mAh | 89.7% | 77.4% | 58.2% |
| Comparative Example 2 | 100%, 54.1 mAh | 88.3% | 74.9% | 51.6% |
| Comparative Example 3 | 100%, 53.1 mAh | 91.1% | 80.3% | 65.7% |

Referring to Table 1 above, it can be seen that the secondary battery of Example 1 having the electrode structure according to the present invention exhibits higher rate characteristics than the secondary batteries of Comparative Examples 1 and 2 having the single-layer structure and the secondary battery of Comparative Example 3 having the two layer structure.

In particular, it can be seen that the secondary batteries of Comparative Examples 1 and 3 exhibit lower rate characteristics than the secondary battery of Example 1, although the content of the conducting agent in the electrode of each of the secondary batteries of Comparative Examples 1 and 3 is higher than that of the conducting agent in the electrode of the secondary battery of Example 1.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

### [Industrial Applicability]

As is apparent from the above description, an electrode according to the present invention is configured to have a multilayer structure, e.g. a structure including three or more layers, in which the content of a conducting agent of one of adjacent electrode mixture layers that is relatively close to a current collector in the direction in which a plurality of electrode mixture layers is formed is higher than that of a conducting agent of the other of the adjacent electrode mixture layers that is relatively distant from the current collector, whereby it is possible to prevent an increase in resistance due to lack of the conducting agent in the vicinity of the current collector, thereby improving electrical conductivity. Consequently, it is possible to improve the capacity and output characteristics of a secondary battery including the electrode according to the present invention.

## Claims

1. A multilayer electrode comprising an electrode current collector for transmitting electrons between an external wire and an electrode active material and three or more electrode mixture layers sequentially applied to the electrode current collector, wherein
each of the electrode mixture layers comprises an electrode active material and a conducting agent, and wherein
a content of the conducting agent of one of adjacent electrode mixture layers that is relatively close to the current collector in a direction in which the electrode mixture layers are formed is higher than a content of the conducting agent of the other of the adjacent electrode mixture layers that is relatively distant from the current collector.

2. The multilayer electrode according to claim 1, wherein a difference in the content of the conducting agent between the adjacent electrode mixture layers is 0.5 weight % to 10 weight %.

3. The multilayer electrode according to claim 2, wherein the difference in the content of the conducting agent between the adjacent electrode mixture layers is 2 weight % to 5 weight %.

4. The multilayer electrode according to claim 1, wherein the content of the conducting agent of an innermost one of the electrode mixture layers, which directly contacts the electrode current collector, is 3 weight % to 40 weight % based on a total weight of the innermost electrode mixture layer within a range in which the content of the conducting agent of the innermost electrode mixture layer is higher than the content of the conducting agent of an electrode mixture layer that is adjacent to the innermost electrode mixture layer.

5. The multilayer electrode according to claim 1, wherein the content of the conducting agent of an outermost one of the electrode mixture layers, which is most distant from the electrode current collector, is 1 weight % to 10 weight % based on a total weight of the outermost electrode mixture layer within a range in which the content of the conducting agent of the outermost electrode mixture layer is lower than the content of the conducting agent of an electrode mixture layer that is adjacent to the outermost electrode mixture layer.

6. The multilayer electrode according to claim 1, wherein the conducting agents of the adjacent electrode mixture layers are not mixed with each other but adjoin each other at an interface between the adjacent electrode mixture layers.

7. The multilayer electrode according to claim 1, wherein the conducting agents of the adjacent electrode mixture layers are mixed with each other at an interface between the adjacent electrode mixture layers so as to have a concentration gradient.

8. The multilayer electrode according to claim 7, wherein the conducting agents of the adjacent electrode mixture layers have a concentration gradient in which the contents of the conducting agents are sequentially reduced in a direction that becomes distant from the electrode current collector.

9. The multilayer electrode according to claim 1, wherein the three or more electrode mixture layers have a same thickness.

10. The multilayer electrode according to claim 1, wherein two or more of the three or more electrode mixture layers have different thicknesses.

11. The multilayer electrode according to claim 1, wherein the electrode active materials in the three or more electrode mixture layers are of a same kind.

12. The multilayer electrode according to claim 1, wherein the electrode active materials in two or more of the three or more electrode mixture layers are of different kinds.

13. The multilayer electrode according to claim 1, wherein the conducting agents in the three or more electrode mixture layers are of a same kind.

14. The multilayer electrode according to claim 1, wherein the conducting agents in two or more of the three or more electrode mixture layers are of different kinds.

15. The multilayer electrode according to claim 1, wherein each of the three or more electrode mixture layers further comprises a binder.

16. The multilayer electrode according to claim 1, wherein the multilayer electrode is a positive electrode.

17. A method of manufacturing the electrode according to claim 1, the method comprising:
(a) preparing three or more electrode slurries having different contents of conducting agents; and
(b) sequentially applying the electrode slurries to a surface of an electrode current collector, with one of the electrode slurries having a highest content of the conducting agent being applied first, and drying the electrode slurries to form electrode mixture layers.

18. The method according to claim 17, wherein step (b) comprises individually drying each of the electrode slurries after application of each of the electrode slurries.

19. A lithium secondary battery comprising the multilayer electrode according to claim 1.

20. A battery module comprising the lithium secondary battery according to claim 19 as a unit cell.

21. A device comprising the battery module according to claim 20 as a power source.

22. The device according to claim 21, wherein the device is an electric vehicle, a hybrid electric vehicle, a plug-in hybrid electric vehicle, or a power storage system.
